Europäisches Patentamt

European Patent Office

Office européen des brevets

(19)

(11) Veröffentlichungsnummer: **0 348 738**
**A2**

(12) # EUROPÄISCHE PATENTANMELDUNG

(21) Anmeldenummer: 89110809.4

(22) Anmeldetag: 14.06.89

(51) Int. Cl.⁴: **G01N 21/17 , G01N 21/88 , G01N 21/55 , G01R 31/26**

(30) Priorität: 01.07.88 DE 3822346

(43) Veröffentlichungstag der Anmeldung:
03.01.90 Patentblatt 90/01

(84) Benannte Vertragsstaaten:
**DE FR GB IT NL**

(71) Anmelder: **Siemens Aktiengesellschaft**
**Wittelsbacherplatz 2**
**D-8000 München 2(DE)**

(72) Erfinder: **Alpern, Peter, Dr.**
**Untere Hausbreite 45**
**D-8000 München 45(DE)**
Erfinder: **Savignac, Dominique, Dr.**
**Bahnhofstrasse 2**
**D-8045 Ismaning(DE)**
Erfinder: **Wurm, Stefan, Dipl.-Phys.**
**Winzererstrasse 172**
**D-8000 München 40(DE)**

(54) **Verfahren zur zerstörungsfreien Bestimmung elektronischer Inhomogenitäten in Halbleiterschichten.**

(57) Durch Bestrahlung einer Halbleiterschicht mit intensitätsmodulierter Laserstrahlung wird eine modulierte optische Reflektivität für einen Laserstrahl anderer Wellenlänge induziert. Die modulierte optische Reflektivität gilt als Maß für die Dichte der elektronischen Inhomogenitäten und kann ortsaufgelöst gemessen werden. Die Verwendung eines Meßlaserstrahls mit einer Wellenlänge im Bereich von 200 bis 345 nm macht genaue Messungen im gesamten Anwendungsbereich, insbesondere die Bestimmung niedriger bis hoher Implantationsdosen und die Bestimmung von Restschäden in kristallinen Halbleiterschichten, möglich.

FIG 4

# Verfahren zur zerstörungsfreien Bestimmung elektronischer Inhomogenitäten in Halbleiterschichten

Die Erfindung betrifft ein Verfahren zur zerstörungsfreien Bestimmung elektronischer Inhomogenitäten einer Halbleiterschicht durch Messen der durch Bestrahlung der Halbleiterschicht mit intensitätsmodulierter Laserstrahlung induzierten modulierte optische Reflektivität eines Laserstrahls anderer Wellenlänge.

Mit zunehmender Miniaturisierung der Strukturen von Halbleiterbauelementen steigt der Bedarf und die Anforderungen an zerstörungsfreien Analyseverfahren für Halbleiterschichten. Zur Überwachung einzelner Prozeßschritte bei der Fertigung von Halbleiterstrukturen können optische Meßverfahren dazu eingesetzt werden, elektronische Inhomogenitäten, die z.B. durch Defekte in kristallinen Halbleiterschichten oder durch Ionenimplantationen hervorgerufen werden, zu bestimmen.

Optische Meßverfahren, die zur Bestimmung der elektronischen Inhomogenitäten einer Halbleiterschicht den Effekt der modulierten optischen Reflektivität (MOR-Technik) nutzen, werden in den Veröffentlichungen Appl. Phys. Letters 47 (6), 1985, Seite 584-586, Appl. Phys. Letters 47 (5), 1985, Seite 498-500, J. Appl. Phys. 61 (1), 1987, Seite 240-248 und in der Diplomarbeit von St. Wurm an der TU München, Physik-Department Insitut E-13, April 1988 beschrieben und sind in handelsüblichen Meßgeräten, z.B. "Therma Probe 200" der Firma Therma Wave Inc. (USA), angewendet.

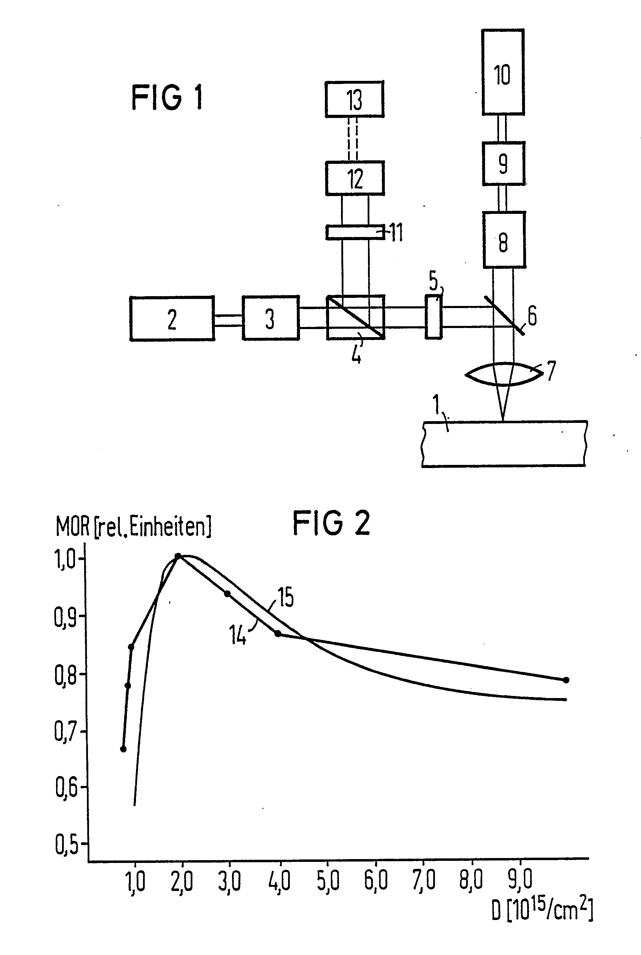

Anhand der FIG 1 bis 3 wird nachfolgend das Prinzip der Messung der modulierten optischen Reflektivität erläutert.

FIG 1 zeigt das Blockschaltbild eines Meßaufbaus zur Bestimmung der modulierten optischen Reflektivität einer Meßprobe 1. Ein Argon$^+$-Ionenlaser 10 dient zur Anregung der Meßprobe 1 (Pumplaser) Der auf die Meßprobe 1 auftreffende Argon$^+$-Ionenlaserstrahl hat eine Wellenlänge von 488 nm bei einer Leistung von 5 mW. Mit Hilfe eines akusto-optischen Modulators 9 mit einer vorgegebenen Modulationsfrequenz von 1 MHz intensitätsmoduliert. Mittels eines Strahlaufweiters 8 und eines Mikroskopobjektivs 7 wird der Argon$^+$-Ionenlaserstrahl auf die Meßprobe 1 fokusiert. Ein HeNe-Laser 2 liefert den Meßlaserstrahl mit einer Wellenlänge von 632,8 nm bei einer Leistung von 2 bis 3 mW. Der HeNe-Laserstrahl durchläuft eine Reihe von optischen Komponenten wie einen Strahlaufweiter 3, einen polarisierenden Strahlteiler 4, ein λ/4-Plättchen 5 und wird mit Hilfe eines halbdurchlässigen Spiegels 6 parallel zum modulierten Argon$^+$-Ionenlaserstrahl durch das Mikroskopobjektiv 7 eingekoppelt und trifft konfokal mit diesem auf die Meßprobe 1. Der von der Meßprobe 1 zurückreflektierte HeNe-Laserstrahl durchläuft nochmals das λ/4-Plättchen und wird vom polarisierenden Strahlteiler 4 durch ein Interferenzfilter 11 auf eine Photozelle 12 gelenkt, mit der das Meßsignal nachgewiesen wird. Ein Lock-in-Verstärker 13, der als Referenzfrequenz die Modulationsfrequenz des Argon$^+$-Ionenlaserstrahls verwendet, gibt als Ausgangsspannung die Amplitude der mit einer Frequenz von 1 MHz periodisch modulierten Probenreflektivität für HeNe-Laserlicht wieder. Die modulierte optische Reflektivität MOR wird in willkürlichen Einheiten angegeben. Sie ist proportional der Änderung der Probenreflektivität ΔR, die sich aus der Differenz der bei Anregung der Probe durch den Pumplaser auftretenden Reflektivität R und der ohne Anregung der Probe durch den Pumplaser auftretenden normalen Reflektivität $R_0$ ergibt. ($\Delta R = R - R_0$).

FIG 2, Kurve 14 zeigt die Abhängigkeit der modulierten optischen Reflektivität MOR für HeNe-Laserstrahlung von der Implantationsdosis D bei einer Messung der modulierten Reflektivität einer Ionenimplantierten Siliziumschicht. Kurve 15 gibt das aus einem theoretischen Modell erhaltene Verhalten wieder. Die Darstellung ist der Diplomarbeit von St. Wurm entnommen, in der experimentelle Arbeiten und theoretische Betrachtungen weiter beschrieben werden.

FIG 2 zeigt die Abhängigkeit der modulierten optischen Reflektivität MOR für HeNe-Laserstrahlung von der Dicke d einer amorphen Siliziumschicht. Die Testproben unterschiedlicher Dicke d wurden durch Ionenimplantation von Silizium$^+$-Ionen in kristallines Silizium (100-Material) erzeugt, wobei eine konstante Implantationsdosis D von 1 x $10^{15}$ Ionen/cm² eingehalten wurde und die Implantationsenergie variiert wurde. Kurve 17 gibt das aus einem theoretischen Modell erhaltene Verhalten wieder. Die Darstellung ist aus der Diplomarbeit von St. Wurm entnommen.

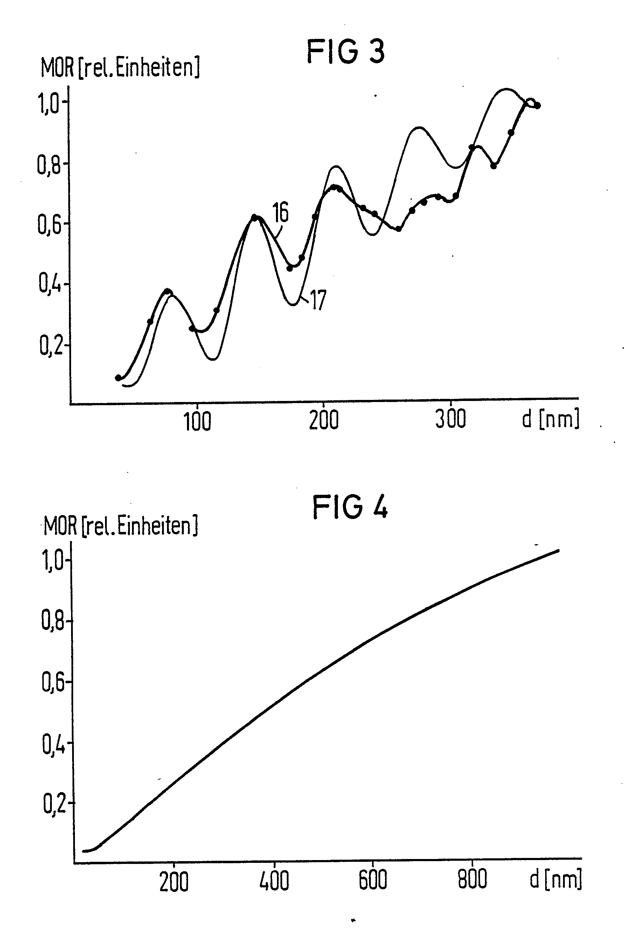

Die Bestimmungen von Implantationsdosen in Halbleiterschichten durch Messen der modulierten optischen Reflektivität mittels des beschriebenen Verfahrens eignet sich für den Bereich niedriger Implantationsdosen von ca. $10^{10}$ cm$^{-2}$ bis $10^{13}$ cm$^{-2}$. Im Bereich hoher Dosen (oberhalb $10^{15}$ cm$^{-2}$), wie sie z. B. ein Source-Drain-Implantationen vorkommen, entsteht an der Halbleiteroberfläche eine amorphe Schicht, deren Dicke sowohl von der Dosis als auch von der Implantationsenergie abhängt. Es liegt somit ein Schichtsystem mit unterschiedlichen optischen Eigenschaften vor. Aufgrund der Interferenzeffekte durch Reflexion des Meßlaserstrahls in unterschiedlichen Schichten ist keine eindeutige Zuordnung des Meßsignals zur Implantationsdosis D möglich. Das Meßsignal R ist von der Schichtdicke d der implantierten Halbleiterschicht, d. h. von der gewählten Implantationsenergie abhängig und zeigt dabei einen oszillatorischen Verlauf (FIG 3). Für den Bereich mittlerer Implantationsdosen (ca. $10^{13} cm^{-2}$ bis $10^{14} cm^{-2}$) kann die Implantationskontrolle mittels Schichtwiderstandsmessungen über Kontaktnadeln erfolgen. Für den Bereich hoher Implantationsdosen gibt es bisher keine alternativen Meßverfahren, die genaue Messwerte liefern können.

Auch bei Anwendung des Verfahrens zur Bestimmung von Restschäden, z.B. Kristalldefekten in kristallinen Halbleiterschichten, ist keine eindeutige Zuordnung zwischen Höhe des Meßsignals und Defektdichte möglich, da das Meßsignal von der Tiefe abhängig ist, in der sich die Defekte in der Halbleiterschicht befinden.

Aufgabe der Erfindung ist es, ein Verfahren zur zerstörungsfreien Bestimmung der elektronischen Inhomogenitäten einer Halbleiterschicht anzugeben, mit dem die Dichte der elektronischen Inhomogenitäten genau bestimmt werden kann. Das Verfahren soll insbesondere zur Implantationskontrolle im Bereich hoher Implantationsdosen (oberhalb von ca. $10^{15} cm^{-2}$) geeignet seien.

Diese Aufgabe wird durch ein Verfahren der eingangs genannten Art dadurch gelöst, daß die modulierte optische Reflektivität einer Laserstrahlung mit einer Wellenlänge im Bereich von 200 bis 345 nm als Maß für die Dichte der elektronischen Inhomogenitäten gemessen wird.

Während ein HeNe-Laserstrahl mit einer Wellenlänge von 632,8 nm wegen seines niedrigen Absorptionskoeffizienten eine große Eindringtiefe in Halbleitermaterial aufweist, z. B. ca. 2000 nm in Silizium, ist bei Verwendung von Laserstrahlung im Wellenlängenbereich von 200 bis 345 nm, für die die gebräuchlichen Halbleitermaterialien, wie z. B. Silizium, Germanium, Galliumarsenid, Galliumantimonid und Indiumphosphid, ein starkes Absorpionsvermögen aufweisen, die Eindringtiefe des Meßlaserstrahles in die Halbleiterschicht stark verringert (z.B. ca.10 nm in Silizium). Interferenzen von aus verschiedenen Tiefen der Halbleiterschicht reflektierter Strahlung des Meßlaserstrahls treten daher, im Gegensatz zu den bekannten Verfahren, nicht auf, so daß ein eindeutiger Zusammenhang zwischen Meßsignal und der Dichte der elektronischen Inhomogenitäten erhalten wird. Mittels der erfindungsgemäßen Verfahrens können daher die in der Halbleiterschicht vorhandenen elektronischen Inhomogenitäten durch Messung im Oberflächenbereich der Halbleiterschicht, der durch die elektronischen Inhomogenitäten beeinflußt ist, bestimmt werden.

Weitere Ausgestaltungen und Weiterbildungen der Erfindung gehen aus den Unteransprüchen sowie der anhand eines Ausführungsbeispiels gegebenen Beschreibung hervor.

Als Ausführungsbeispiel zur Lehre der Erfindung wird der Meßaufbau aus FIG 1 verwendet, wobei folgende Meßparameter gelten:
Pumplaser: Argon$^+$-Ionenlaser, Wellenlänge 488 nm, Leistung 5 mW.
Meßlaser: Helium-Cadmium-Laser, Wellenlänge 325 nm, Leistung 8 mW, z.B. Helium-Cadmium-Laser Typ multi mode 356 XM, Omnichrom (Firma Laser 200, München). Durchmesser des Meßpunktes 1 µm, Eindringtiefe 10 nm.
Probe: Implantierte Silizium-Schicht, Implantationsdosis größer als $10^{15}$ Ionen $cm^{-2}$.

FIG 4 zeigt die erwartete Abhängigkeit des Meßsignals der modulierten optischen Reflektivität MOR für die Helium-Cadmium-Laserstrahlung von der Dicke d der implantierten Siliziumschicht. Die Kurve kann mittels der aus der Literatur zum Stand der Technik (Diplomarbeit von St. Wurm) bekannten theoretischen Grundgleichungen berechnet werden, wobei als implantierte Siliziumschicht eine durch Ionenimplantation mit Silizium$^+$-Ionen erzeugte amorphe Siliziumschicht auf einem Siliziumsubstrat herangezogen wird.

Für die Helium-Cadmium-Laserstrahlung sind aufgrund des hohen Absozionskoeffizienten in Silizium und in der ionenimplantierten Siliziumschicht, für Dicken größer als 20 nm keinerlei Interferenzeffekte zu erwarten. Der Zusammenhang zwischen der modulierten optischen Reflektivität R und der Dicke d der amorphen Siliziumschicht zeigt, daß eine eindeutige Zuordnung zwischen dem Meßsignal und der Implantationsdosis bzw. Implantationsenergie möglich ist. Das Verfahren kann für den gesamten gebräuchlichen Implantationsdosisbereich und insbesondere auch für strukturierte Halbleiterscheiben, angewendet werden. Bei einem Meßfleck in der Größenordnung von 1 µm ist das erfindungsgemäße Verfahren zur Durchführung ortsaufgelöster Messungen verwendbar.

Das erfindungsgemäße Verfahren kann zur Analyse jeglicher Halbleiterschichten eingesetzt werden, bei denen in charakteristischer Weise elektronische Inhomogenitäten vorliegen.

Die Erfindung beinhaltet neben der Anwendung des Verfahrens zur Bestimmung von Implantationsdosen von Halbleiterschichten insbe sondere auch die Anwendung zur Bestimmung von Restschäden in kristallinen Halbleiterschichten.

**Ansprüche**

1. Verfahren zur zerstörungsfreien Bestimmung der elektronischen Inhomogenitäten einer Halbleiterschicht durch Messen der durch Bestrahlung der Halbleiterschicht mit intensitätsmodulierter Laserstrahlung induzierten modulierten optischen Reflektivität eines Laserstrahls anderer Wellenlänge, **dadurch gekennzeichnet,** daß die modulierte optische Reflektivität einer Laserstrahlung einer Wellenlänge im Bereich von 200 bis 345 nm als Maß für die Dichte der elektronischen Inhomogenitäten gemessen wird.

2. Verfahren nach Anspruch 1, **dadurch gekennzeichnet,** daß zur Durchführung ortsaufgelöster Messungen der zu reflektierende Laserstrahl so fokusiert wird, daß ein Meßfleck mit einem Durchmesser von 0,5 bis 5 μm auf der Halbleiterschicht entsteht.

3. Anwendung des Verfahrens nach Anspruch 1 oder 2 zur Bestimmung der Implantationsdosis in Halbleiterschichten.

4. Anwendung des Verfahrens nach Anspruch 3 zur Bestimmung der Implantationsdosis in Siliziumschichten.

5. Anwendung des Verfahrens nach Anspruch 1 oder 2 zur Bestimmung von Restschäden in kristallinen Halbleiterschichten.

6. Anwendung des Verfahrens nach Anspruch 5 zur Bestimmung von Restschäden in kristallinen Siliziumschichten.

FIG 1

FIG 2

MOR [rel.Einheiten]

D [$10^{15}$/cm$^2$]

FIG 3

FIG 4